# FASCICULE DE BREVET EUROPEEN

(11) **EP 1 237 343 B1**
(45) Date de publication et mention de la délivrance du brevet: **11.11.2009**
(21) Numéro de dépôt: 02004084.6
(22) Date de dépôt: 25.02.2002
(51) Int. Cl.: H04L 29/06, B60R 16/02

(54) **Dispositif d'interface et procédé pour la programmation d'unités électroniques de commande à bord d'un véhicule automobile**
Schnittstellengerät und Verfahren zur Programmierung von elektronischen Steurereinheiten an Bord eines Kraftwagens
Interface device and method for programming electronic control units on board of a motor vehicle

(30) Priorité: 27.02.2001 FR 0102639
(43) Date de publication de la demande: 04.09.2002
(73) Titulaire: Magneti Marelli France S.A.S, 92721 Nanterre Cedex (FR)
(72) Inventeur: Gouron, Franck, 86220 Ingrandes (FR); Villarroel, Ramon, 86210 Vouneuil/Vienne (FR); Pham, Paul, 91160 Longjumeau (FR)
(74) Mandataire: Deambrogi, Edgardo

(56) Documents cités:
- US-A- 5 365 436
- US-A- 5 521 588

## Description

La présente invention concerne un dispositif d'interface et un procédé pour la programmation des unités électroniques de commande à bord d'un véhicule.

Ainsi que ceci est bien connu des opérateurs du secteur, un nombre d'unités électroniques de commande toujours plus grand est installé à bord des véhicules automobiles pour présider à une pluralité de fonctions de commande, de régulation, de coordination et de surveillance des dispositifs de bord.

L'utilisation croissante de l'électronique dans la gestion perfectionnée des fonctions de l'habitacle ou de la carrosserie pour augmenter le confort et la sécurité de conduite, des systèmes d'assistance à la conduite, de commande et contrôle de moteurs et des émissions de gaz, des systèmes de propulsion alternatifs, pour ne citer à titre d'exemple que quelques champs d'application importants, conduit à la nécessité de modifier ou de mettre à jour fréquemment les programmes logiciels mémorisés dans les unités de commande, et ceci de manière fiable et rapide.

Aujourd'hui, de telles interventions de mise à jour sont effectuées séparément et avec difficulté, parce que chaque unité utilise un protocole propre de communication pour effectuer le transfert des données et dispose d'un connecteur électrique spécifique pour réaliser la liaison aux dispositifs externes utilisés pour le chargement des programmes. Il est donc nécessaire d'avoir des instruments dédiés pour l'intervention de mise à jour, en fonction de l'unité à laquelle on prétend se relier.

Le document US 5 521 588 décrit un système et un procédé pour programmer au moins un appareil de commande d'automobile à moderniser ou à monter après coup comme appareil neuf ou comme remplacement, permettant une programmation aussi simple, sûre et efficace que possible d'un tel appareil de commande.

Ce résultat est obtenu avec un agencement de programmation qui s'appuie sur une pluralité d'appareils de commande reliés entre eux et à un appareil de commande central par un bus leur permettant de communiquer entre eux.

Le procédé permet la programmation d'au moins un appareil de commande d'automobile dans un véhicule automobile qui comporte plusieurs appareils de commande reliés entre eux par un bus pour pouvoir communiquer, appareils dont l'un, ayant une fonction centrale, est muni d'une mémoire rémanente de configuration de véhicule, dans laquelle peuvent être mémorisées des informations sur la nature du véhicule et de son équipement, ainsi que sur la nature et le nombre des appareils de commande présents à un moment donné dans le véhicule.

Dans l'appareil de commande central est stocké, pour y être résident, un programme de programmation pour distribuer par le système de bus et pour provoquer le chargement de données de configuration provenant de la mémoire de configuration de véhicule dans les différents appareils de commande, et chacun des appareils de commande est muni d'une fonction de bus pour la réception, la sélection et la mémorisation des données de configuration de véhicule à distribuer aux appareils, l'agencement étant tel que, au moins à chaque initialisation du programme de programmation résident de l'appareil de commande central pour la distribution des données de configuration de véhicule par le système de bus, ces données sont transmissibles aux différents appareils de commande et peuvent y être mémorisées.

L'invention de US 5 521 588 n'aborde pas le problème alors que des différents appareils de commande fonctionnent avec de protocoles de transmission distincts.

Le but de la présente invention est de fournir une solution satisfaisante remédiant aux inconvénients exposés, permettant de gérer les procédures de mise à jour des différentes unités de commande à bord d'un véhicule automobile, d'une manière simple et rapide, malgré des protocoles de fonctionnement et de transmission distincts.

Selon la présente invention, ce but est atteint au moyen d'un dispositif d'interface comprenant, en combinaison:
- des premiers moyens de circuit d'interface vers une unité d'assistance à la programmation, agencés pour échanger des informations avec ladite unité par un premier protocole de transmission prédéterminé;
- des deuxièmes moyens de circuit d'interface vers une pluralité d'unités de commande de bord, comprenant une pluralité de modules de circuit correspondants, agencés pour échanger chacun des informations avec au moins une desdites unités par un respectif deuxième protocole de transmission prédéterminé;
- des premiers et des deuxièmes moyens mémoire pour mémoriser respectivement un ensemble de données de programmation d'une unité de commande à programmer et un ensemble d'instructions opérationnelles indicatives du protocole de transmission demandé pour réaliser la liaison à ladite unité; et
- une unité de traitement susceptible de gérer le transfert de données entre une unité d'assistance à la programmation, externe au véhicule, et au moins une unité de commande de bord, ladite unité étant accouplée:
   aux premiers moyens d'interface, pour recevoir lesdits ensembles de données de programmation et d'instructions opérationnelles de l'unité d'assistance, par un premier protocole de transmission;
   aux premiers et deuxièmes moyens mémoire pour mémoriser l'ensemble de données de programmation dans les premiers moyens mémoire et l'ensemble d'instructions opérationnelles dans les deuxièmes moyens mémoire, et
   aux deuxièmes moyens d'interface, pour transférer l'ensemble de données de programmation à une unité de commande par un deuxième protocole de transmission, déterminés par lesdites instructions opérationnelles, en passant par un module sélectionné parmi ladite pluralité de modules de circuit.

Des variantes d'un tel dispositif seront décrites plus loin.

En outre, fait l'objet de l'invention un procédé de programmation d'unités électroniques de commande à bord d'un véhicule automobile utilisant pour la programmation desdites unités un dispositif d'interface selon l'invention et ses variantes, et comprenant les étapes consistant à:
- prévoir dans une unité d'assistance à la programmation un ensemble de données de programmation d'une unité de commande prédéterminée et un ensemble d'instructions opérationnelles indicatives du protocole de transmission demandé pour réaliser la liaison à ladite unité de commande;
- mémoriser lesdits ensembles de données de programmation et d'instructions opérationnelles dans des premiers et deuxièmes moyens mémoire respectifs, d'un dispositif d'interface préalablement accouplé à l'unité d'assistance à la programmation;
- accoupler ledit dispositif d'interface à une unité de commande à programmer présélectionnée à bord d'un véhicule; et
- réaliser le transfert desdites données de programmation, desdits premiers moyens mémoire du dispositif d'interface à l'unité de commande reliée, selon un protocole de transmission indiqué par lesdites instructions opérationnelles mémorisées dans lesdits deuxièmes moyens mémoire.

En synthèse, la présente invention se fonde sur le principe de fournir avantageusement un dispositif d'interfaçage unique agencé pour gérer les différents protocoles de communication et faire l'interface électrique envers les unités de commande de bord, afin de pouvoir effectuer les mises à jour de leurs programmes logiciels.

De manière appropriée, ce dispositif est agencé pour permettre le transfert des données vers lesdites unités, de manière protégée et uniquement suite à l'accès conditionné de la part des opérateurs habilités, en prévoyant une série de niveaux de protection différents, en fonction des opérations spécifiques de mise à jour prévues.

D'autres caractéristiques et avantages de l'invention seront exposés de façon plus détaillée dans la description ci-après d'une de ses formes de réalisation donnée à pur titre d'exemple non limitatif, en se référant aux dessins annexés dans lesquels:
la figure 1 représente un premier schéma à blocs partiels du dispositif objet de l'invention dans lequel sont mis en évidence les ressources de communication du dispositif; et
la figure 2 représente un deuxième schéma à blocs partiels du dispositif objet de l'invention, dans lequel sont mis en évidence les ressources de mémoire du dispositif.

Le dispositif selon l'invention est agencé pour être accouplé à une unité d'assistance à la programmation, tel qu'un ordinateur ordinaire, de manière à recevoir un ensemble de données de programmation, pour mémoriser ces données et les transférer successivement à l'une d'une pluralité d'unités électroniques de commande à bord d'un véhicule automobile, agencée pour la mise à jour de paramètres opérationnels.

Le dispositif faisant l'objet de l'invention comprend une unité de traitement 10, tel qu'un microcontrôleur ou un microprocesseur, une partie d'interface pour la liaison avec les unités de commande et l'unité d'assistance à la programmation, ainsi que pour la commande de la part d'un opérateur, et une partie mémoire pour la mémorisation d'instructions opérationnelles et de données de programmation des unités de commande.

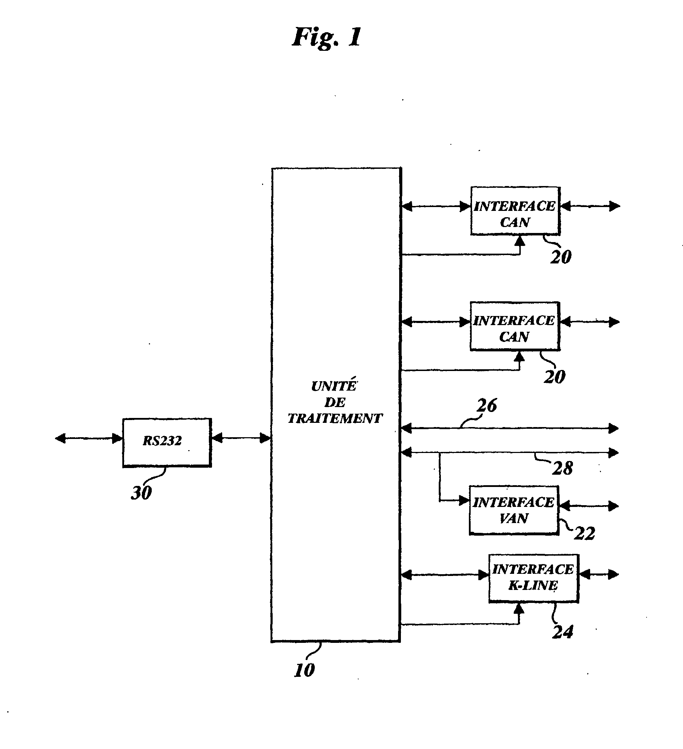

En se référant à la figure 1, le dispositif d'interface est décrit en mettant en évidence les ressources de communication, c'est-à-dire les modules de circuit qui en permettent la liaison avec les unités et les opérateurs externes.

L'unité de traitement 10 est accouplée à une pluralité de modules de circuit d'interface, c'est-à-dire respectivement à une paire de modules d'interface 20 vers un réseau CAN (qui est l'acronyme de Controlled Area Network), à un module d'interface 22 vers un réseau VAN (qui est l'acronyme de Vehicle Area Network) et à un module d'interface 24 vers une ligne de transmission du type "K line". L'accouplement se fait par l'intermédiaire d'une liaison série bidirectionnelle et, à l'exclusion de l'interface avec le réseau VAN, par l'intermédiaire d'une ligne de commande.

Dans l'exemple, on a indiqué deux autres liaisons directes à un bus IIC 26 et à un bus SPI (Serial Peripheral Interface) 28, mais d'autres modules d'interface qui ne sont pas représentés, par exemple vers des réseaux LIN (Local Interconnect Network), peuvent être rendues disponibles de manière équivalente.

A l'opposée des modules 20, 22, 24 mentionnés ci-dessus, par rapport à l'unité de traitement 10, est encore indiqué un module d'interface 30 classique pour effectuer la liaison série bidirectionnelle avec un ordinateur ordinaire selon le protocole RS232.

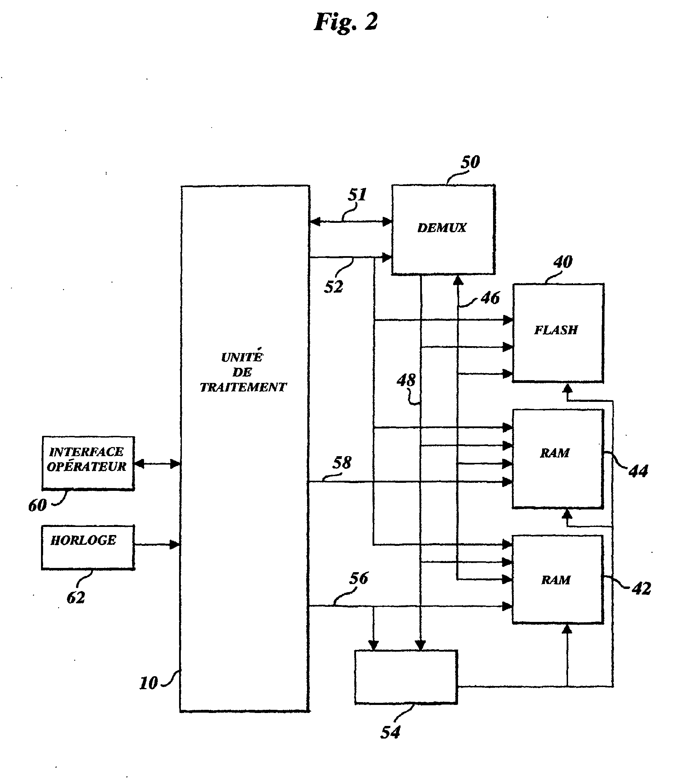

En se référant à la figure 2, le dispositif d'interface est décrit en mettant en évidence les ressources de mémoire, c'est-à-dire les circuits qui permettent la mémorisation d'instructions opérationnelles et de données de programmation.

On a indiqué par 40, 42, 44 trois circuits mémoire, respectivement un circuit mémoire FLASH 40 externe à l'unité de traitement 10, pour l'amorçage de cette dernière, et une paire de circuits mémoire RAM 42, 44.

Les circuits mémoire échangent des données mémorisées avec l'unité de traitement 10, au moyen d'une paire de bus, respectivement un bus de données 46 et un bus d'adresse 48, à travers un démultiplexeur 50 d'adresses/données, et encore un bus ordinaire d'adresses/données 51, en fonction de signaux de commande reçus par l'unité 10 au moyen d'un bus de commande 52.

Un circuit décodeur d'adresses 54 est reliée au bus d'adresse 48, et couplé à des entrées respectives de sélection des circuits mémoire 40, 42, 44.

Un premier circuit mémoire RAM 42 est agencé pour mémoriser des données de programmation, et recevoir en entrée un premier signal de sélection des contenus, par une première ligne de sélection 56.

Un deuxième circuit mémoire RAM 44 est agencé pour mémoriser des instructions opérationnelles, et recevoir en entrée un deuxième signal de sélection des contenus sur une deuxième ligne de sélection 58.

Un circuit d'interface avec un utilisateur, désigné par 60, est relié directement à l'unité de traitement 10.

On a enfin désigné par 62 une interface d'horloge pour la synchronisation de l'unité de traitement 10.

De manière appropriée, le dispositif objet de l'invention est incorporé dans un terminal du type palmaire, transportable, muni de périphériques d'interface avec l'utilisateur, tel qu'un clavier pour l'envoi d'instructions opérationnelles, de codes, de mots de passe, et un écran pour permettre la visualisation d'informations nécessaires ou utiles pour l'exécution des opérations de programmation.

Le dispositif décrit permet avantageusement de gérer les différents protocoles de communication utilisés dans les liaisons avec les diverses unités de commande présentes à bord d'un véhicule et de transmettre à une telle unité toute une série de données de programmation.

Pour une intervention de mise à jour d'une unité spécifique de commande, le programme logiciel à transférer à celle-ci est mémorisé dans le dispositif par l'unité d'assistance à la programmation reliée à lui au moyen du modulé d'interface 30, en utilisant le protocole de transmission standard RS232.

Avantageusement, cette opération est permise seulement à la suite de la reconnaissance d'un mot de passe et d'une clef hardware introduit par l'opérateur habilité à effectuer la mise à jour.

Au cours de cette opération, les données de programmation sont mémorisées temporairement dans le circuit mémoire RAM 42, tandis que les instructions opérationnelles sur le protocole de communication requis dans la liaison avec l'unité destinée à recevoir la mise à jour sont mémorisées dans le circuit mémoire RAM 44.

L'unité de traitement 10 préside ainsi à la communication des données de programmation à l'unité de commande de destination, en acheminant de telles données à travers le module d'interface agencé pour la transmission selon le protocole propre de l'unité de destination, sur la base des indications mémorisées dans le circuit mémoire 44.

Pour effectuer le transfert des données de programmation à l'unité de commande, le dispositif peut fonctionner en mode autonome ("stand alone"), utilisant directement l'alimentation électrique du véhicule.

De manière appropriée, également cette opération est autorisée uniquement à la suite de la reconnaissance d'un mot de passe introduit par l'opérateur habilité à l'effectuer.

Les données de programmation à transférer à l'unité de commande peuvent être chiffrées pour en garantir l'intégrité et la confidentialité.

Avantageusement, le dispositif objet de l'invention peut être utilisé en union avec des appareils de test, afin de simuler différents types de réseau pour communiquer avec les unités de commande de bord.

Naturellement, en restant dans le principe de l'invention, les formes de réalisation et les détails de réalisation peuvent être amplement modifiés par rapport à ce qui a été écrit et illustré à pur type d'exemple non limitatif, sans pour cela sortir du champ de protection de la présente invention.

## Revendications

1. Dispositif d'interface pour la programmation d'unités électroniques de commande à bord d'un véhicule automobile, comprenant:
- des premiers moyens de circuit d'interface (30) vers une unité d'assistance à la programmation, agencés pour échanger des informations avec ladite unité par un premier protocole de transmission prédéterminé;
- des deuxièmes moyens de circuit d'interface vers une pluralité d'unités de commande de bord, comprenant une pluralité de modules de circuit (20, 22, 24) correspondants, agencés pour échanger chacun des informations avec au moins une desdites unités par un respectif deuxième protocole de transmission prédéterminé;
- des premiers moyens mémoire (42) pour mémoriser un ensemble de données de programmation d'une unité de commande à programmer; et
- une unité de traitement (10) susceptible de gérer le transfert de données entre une unité d'assistance à la programmation, externe au véhicule, et au moins une unité de commande de bord, ladite unité de traitement (10) étant accouplée:
aux premiers moyens d'interface (30), pour recevoir ledit ensemble de données de programmation de l'unité d'assistance par un premier protocole de transmission; et
aux premiers moyens mémoire (42), pour mémoriser l'ensemble de données de programmation,
le dispositif étant **caractérisé en ce qu'**il comprend en outre :
- des deuxièmes moyens mémoire (44) pour mémoriser un ensemble d'instructions opérationnelles indicatives du protocole de transmission demandé pour réaliser la liaison à l'unité de commande à programmer; et
**en ce que** l'unité de traitement (10) est accouplée :
aux premiers moyens d'interface (30), pour recevoir également ledit ensemble d'instructions opérationnelles de l'unité d'assistance par ledit premier protocole de transmission;
aux deuxièmes moyens mémoire (44), pour mémoriser ledit ensemble d'instructions opérationnelles ; et
aux deuxièmes moyens d'interface, pour transférer l'ensemble de données de programmation à une unité de commande par un deuxième protocole de transmission déterminés par lesdites instructions opérationnelles, en passant par un module sélectionné parmi ladite pluralité de modules de circuit (20, 22, 24).

2. Dispositif d'interface selon la revendication 1, **caractérisé par le fait que** ladite unité de traitement (10) est agencée pour transférer l'ensemble des données de programmation à l'unité de commande actuellement accouplée, seulement à la suite de la reconnaissance d'un mot de passe fourni par l'utilisateur du dispositif.

3. Dispositif d'interface selon la revendication 1 ou 2, **caractérisé par le fait que** ladite unité de traitement (10) est agencée pour recevoir lesdits ensembles de données de programmation et d'instructions opérationnelles venant de l'unité d'assistance à la programmation, seulement à la suite de la reconnaissance d'un mot de passe fourni par un opérateur habilité à l'effectuer.

4. Dispositif d'interface selon l'une quelconque des revendications précédentes, **caractérisé par le fait que** lesdits premiers moyens de circuit d'interface (30) sont agencés pour accoupler le dispositif à l'unité d'assistance à la programmation, par une liaison bidirectionnelle de type série.

5. Dispositif d'interface selon l'une quelconque des revendications précédentes, **caractérisé par** le fait de comprendre des moyens pour être connecté à une alimentation électrique du véhicule.

6. Dispositif d'interface selon l'une quelconque des revendications précédentes, **caractérisé par** le fait de comprendre des moyens pour établir l'interface avec un utilisateur (60), comprenant des moyens pour l'introduction d'instructions de la part de l'utilisateur et des moyens pour la présentation d'informations à l'utilisateur.

7. Dispositif d'interface selon l'une quelconque des revendications précédentes, **caractérisé par** le fait de comprendre des moyens pour chiffrer lesdites données de programmation destinées à être transmises à une unité de commande.

8. Procédé pour la programmation d'unités électroniques de commande à bord d'un véhicule automobile, comprenant les étapes consistant à:
- prévoir dans une unité d'assistance à la programmation un ensemble de données de programmation d'une unité de commande prédéterminée;
- mémoriser ledit ensemble de données de programmation dans des premiers moyens mémoire (42) d'un dispositif d'interface préalablement accouplé à l'unité d'assistance à la programmation;
- accoupler ledit dispositif d'interface à une unité de commande à programmer présélectionnée à bord d'un véhicule pour réaliser le transfert desdites données de programmation, desdits premiers moyens mémoire (42) du dispositif d'interface à l'unité de commande reliée,
**caractérisé en ce qu'**il comprend en outre les étapes consistant à:
- prévoir dans ladite unité d'assistance à la programmation un ensemble d'instructions opérationnelles indicatives du protocole de transmission demandé pour réaliser la liaison à ladite unité de commande;
- mémoriser ledit ensemble d'instructions opérationnelles dans des deuxièmes moyens mémoire (44) dudit dispositif d'interface; et
- réaliser le transfert desdites données de programmation, desdits premiers moyens mémoire (42) du dispositif d'interface à l'unité de commande reliée, selon un protocole de transmission indiqué par lesdites instructions opérationnelles mémorisées dans lesdits deuxièmes moyens mémoire (44),
le procédé utilisant un dispositif d'interface selon l'une des revendications 1 à 7.

9. Procédé selon la revendication 8, **caractérisé par le fait que** la mémorisation desdits ensembles de données de programmation et d'instructions opérationnelles dans les premiers et deuxièmes moyens mémoire (42, 44) respectifs du dispositif d'interface, se fait suite à une reconnaissance d'un mot de passe fourni par l'utilisateur du dispositif.

10. Procédé selon la revendication 8 ou 9, **caractérisé par le fait que** le transfert de l'ensemble des données de programmation à l'unité de commande, auquel le dispositif d'interface a été accouplé, se fait suite à la reconnaissance d'un mot de passe fourni par un opérateur habilité.

11. Procédé selon l'une quelconque des revendications 8 à 10, **caractérisé par** le fait de comprendre une opération de chiffrage des données de programmation destinées à être transmises à une unité de commande.

## Claims

1. Interface device for programming electronic control units on board a motor vehicle, comprising:
- first interface circuit means (30) to a programming assistance unit, arranged to exchange information with the said unit using a first predetermined transmission protocol;
- second interface circuit means to a plurality of on-board control units, comprising a plurality of corresponding circuit modules (20, 22, 24), arranged to each exchange information with at least one of the said units using a respective second predetermined transmission protocol;
- first memory means (42) for storing a set of data for programming a control unit to be programmed; and
- a processing unit (10) capable of managing the transfer of data between a programming assistance unit, outside the vehicle, and at least one on-board control unit, the said processing unit (10) being coupled:
to the first interface means (30), in order to receive the said set of data for programming the assistance unit using a first transmission protocol; and
to the first memory means (42), in order to store the set of programming data,
the device being **characterised in that** it further comprises:
- second memory means (44) for storing a set of operational instructions indicative of the transmission protocol required to make the connection to the control unit to be programmed; and
**in that** the processing unit (10) is coupled:
to the first interface means (30), in order to receive also the said set of operational instructions from the assistance unit using the said first transmission protocol;
to the second memory means (44), in order to store the said set of operational instructions; and
to the second interface means, in order to transfer the set of programming data to a control unit using a second transmission protocol determined by the said operational instructions, via a module selected from the said plurality of circuit modules (20, 22, 24).

2. Interface device according to Claim 1, **characterised in that** the said processing unit (10) is arranged to transfer the set of programming data to the currently coupled control unit, only following the recognition of a password provided by the user of the device.

3. Interface device according to Claim 1 or 2, **characterised in that** the said processing unit (10) is arranged to receive the said sets of programming data and operational instructions coming from the programming assistance unit, only following the recognition of a password provided by an operator authorised to carry it out.

4. Interface device according to any one of the preceding claims, **characterised in that** the said first interface circuit means (30) are arranged to couple the device to the programming assistance unit by a bidirectional connection of the serial type.

5. Interface device according to any one of the preceding claims, **characterised in that** it comprises means to be connected to an electrical supply of the vehicle.

6. Interface device according to any one of the preceding claims, **characterised in that** it comprises means for setting up the interface with a user (60), comprising means for inputting instructions on the part of the user and means for presenting information to the user.

7. Interface device according to any one of the preceding claims, **characterised in that** it comprises means for encoding the said programming data intended to be transmitted to a control unit.

8. Method for programming electronic control units on board a motor vehicle, comprising the steps consisting in:
- providing in a programming assistance unit a set of data for programming a predetermined control unit;
- storing the said programming data in first memory means (42) of an interface device coupled beforehand to the programming assistance unit;
- coupling the said interface device to a preselected control unit to be programmed on board a vehicle in order to carry out the transfer of the said programming data from the said first memory means (42) of the interface device to the connected control unit,
**characterised in that** it further comprises the steps consisting in:
- providing in the said programming assistance unit a set of operational instructions indicative of the transmission protocol required to make the connection to the said control unit;
- storing the said set of operational instructions in second memory means (44) of the said interface device; and
- carrying out the transfer of the said programming data from the said first memory means (42) of the interface device to the connected control unit, according to a transmission protocol indicated by the said operational instructions stored in the said second memory means (44),
the method using an interface device according to one of Claims 1 to 7.

9. Method according to Claim 8, **characterised in that** the storage of the said sets of programming data and operational instructions in the respective first and second memory means (42, 44) of the interface device takes place following recognition of a password provided by the user of the device.

10. Method according to Claim 8 or 9, **characterised in that** the transfer of the set of programming data to the control unit to which the interface device has been coupled takes place following the recognition of a password provided by an authorised operator.

11. Method according to any one of Claims 8 to 10, **characterised in that** it comprises an operation of encoding the programming data intended to be transmitted to a control unit.

## Patentansprüche

1. Schnittstellengerät zur Programmierung von elektronischen Steuereinheiten an Bord eines Kraftwagens, welches enthält:
- erste Mittel einer Schnittstellenschaltung (30) zu einer Hilfseinrichtung für die Programmierung, die so eingerichtet sind, dass mittels eines ersten vorgegebenen Übertragungsprotokolls mit der besagten Steuereinheit Informationen ausgetauscht werden können;
- zweite Mittel einer Schnittstellenschaltung zu einer Vielzahl von Steuereinheiten an Bord, die eine Vielzahl von entsprechenden Schaltungsmodulen (20, 22, 24) enthalten, die jeweils so eingerichtet sind, dass mittels eines betreffenden zweiten vorgegebenen Übertragungsprotokolls mit jeweils mindestens einer der besagten Steuereinheiten Informationen ausgetauscht werden können;
- erste Speichermittel (42), um eine Gesamtheit von Programmierungsdaten einer zu programmierenden Steuereinheit zu speichern;
- eine Verarbeitungseinheit (10), die die Übertragung der Daten zwischen einer außerhalb des Fahrzeugs befindlichen Hilfseinrichtung für die Programmierung und mindestens einer Steuereinheit an Bord steuern und überwachen kann, wobei diese Verarbeitungseinheit (10) angekoppelt ist:
an erste Schnittstellenmittel (30), um die Gesamtheit von Programmierungsdaten von der Hilfseinrichtung mittels eines ersten Übertragungsprotokolls zu empfangen; sowie
an erste Speichermittel (42), um die Gesamtheit der Programmierungsdaten zu speichern;
wobei das Gerät **dadurch gekennzeichnet ist, dass** es weiterhin enthält:
- zweite Speichermittel (44), um eine Gesamtheit von auf das Übertragungsprotokoll hinweisenden Betriebsbefehlen, die für die Herstellung der Verbindung zur zu programmierenden Steuereinheit gefordert sind, zu speichern;
und dass die Verarbeitungseinheit (10) angekoppelt ist:
an erste Schnittstellenmittel (30), um auch die Gesamtheit von Betriebsbefehlen von der Hilfseinrichtung mittels dieses ersten Übertragungsprotokolls zu empfangen;
an zweite Speichermittel (44), um die Gesamtheit von Betriebsbefehlen zu speichern; sowie
an zweite Schnittstellenmittel, um die Gesamtheit von Programmierungsdaten an eine Steuereinheit mittels eines zweiten, von den Betriebsbefehlen festgelegten Übertragungsprotokolls, über ein aus der Vielzahl von Schaltungsmodulen (20, 22, 24) ausgewähltes Modul, zu übertragen.

2. Schnittstellengerät gemäß Anspruch 1,
**dadurch gekennzeichnet,**
**dass** die Verarbeitungseinheit (10) so eingerichtet ist, dass die Gesamtheit von Programmierungsdaten erst dann an die derzeit angekoppelte Steuereinheit übertragen wird, nachdem ein vom Benutzer des Geräts eingegebenes Passwort erkannt wurde.

3. Schnittstellengerät gemäß Anspruch 1 oder 2,
**dadurch gekennzeichnet,**
**dass** die Verarbeitungseinheit (10) so eingerichtet ist, dass sie die Gesamtheit der von der Hilfseinrichtung für die Programmierung kommenden Programmierungsdaten und Betriebsbefehle erst dann empfängt, nachdem ein von einem hierzu befugten Benutzer des Geräts eingegebenes Passwort erkannt wurde.

4. Schnittstellengerät gemäß einem beliebigen der vorstehenden Ansprüche,
**dadurch gekennzeichnet,**
**dass** die ersten Mittel einer Schnittstellenschaltung (30) so eingerichtet sind, dass sie das Schnittstellengerät mit einer bidirektionalen Verbindung des seriellen Typs an die Hilfseinrichtung für Programmierung ankoppelt.

5. Schnittstellengerät gemäß einem beliebigen der vorstehenden Ansprüche,
**dadurch gekennzeichnet,**
**dass** es die Mittel enthält, um an die Stromversorgung eines Kraftwagens angeschlossen zu werden.

6. Schnittstellengerät gemäß einem beliebigen der vorstehenden Ansprüche,
**dadurch gekennzeichnet,**
**dass** es die Mittel enthält, um eine Schnittstelle zu einem Benutzer (60) einzurichten, die ihrerseits Mittel zur Eingabe von Befehlen durch den Benutzer und Mittel zur Darstellung von Informationen für den Benutzer enthält.

7. Schnittstellengerät gemäß einem beliebigen der vorstehenden Ansprüche,
**dadurch gekennzeichnet,**
**dass** es die Mittel enthält, um die Programmierungsdaten, die an eine Steuereinheit übertragen werden sollen, zu verschlüsseln.

8. Verfahren für die Programmierung von Steuereinheiten an Bord eines Kraftwagens, welches die folgenden Schritte enthält, anhand derer:
- eine Gesamtheit von Programmierungsdaten für eine vorbestimmte Steuereinheit in einer Hilfseinrichtung für die Programmierung zur Verfügung steht;
- die besagte Gesamtheit von Programmierungsdaten in den ersten Speichermitteln (42) eines zuvor an die Hilfseinrichtung für die Programmierung angekoppelten Schnittstellengeräts gespeichert wird;
- das Schnittstellengerät an eine zuvor an Bord des Kraftwagens ausgesuchte Steuereinheit angekoppelt wird, um die Programmierungsdaten aus den ersten Speichermitteln (42) des Schnittstellengeräts an die angekoppelte Steuereinheit zu übertragen;
**dadurch gekennzeichnet, dass** es weiterhin die folgenden Schritte enthält, anhand derer:
- eine Gesamtheit von auf das Übertragungsprotokoll hinweisenden Betriebsbefehlen, die für die Herstellung der Verbindung zur Steuereinheit gefordert sind, in der Hilfseinrichtung für die Programmierung zur Verfügung steht;
- die Gesamtheit von Programmierungsdaten in den zweiten Speichermitteln (44) des Schnittstellengeräts gespeichert wird;
- die Programmierungsdaten von den ersten Speichermitteln (42) des Schnittstellengeräts mittels eines Übertragungsprotokolls, auf das die in den zweiten Speichermitteln (44) gespeicherten Betriebsbefehle hinweisen, an die verbundene Steuereinheit übertragen werden; und
wobei das Verfahren ein Schnittstellengerät gemäß einem der Ansprüche 1 bis 7 verwendet.

9. Verfahren gemäß Anspruch 8,
**dadurch gekennzeichnet,**
**dass** die Speicherung der Gesamtheit von Programmierungsdaten und Betriebsbefehlen in den ersten und zweiten Speichermitteln (42, 44) des Schnittstellengeräts erst dann erfolgt, nachdem ein vom Benutzer des Geräts eingegebenes Passwort erkannt wurde.

10. Verfahren gemäß Anspruch 8 oder 9,
**dadurch gekennzeichnet,**
**dass** die Übertragung der Gesamtheit von Programmierungsdaten an die an das Schnittstellengerät angekoppelte Steuereinheit erst dann erfolgt, nachdem ein von einem hierzu befugten Benutzer des Geräts eingegebenes Passwort erkannt wurde.

11. Verfahren gemäß einem beliebigen der vorstehenden Ansprüche 8 bis 10,
**dadurch gekennzeichnet,**
**dass** es einen Vorgang zur Verschlüsselung der Programmierungsdaten enthält, die an eine Steuereinheit übermittelt werden sollen.
